# EUROPEAN PATENT SPECIFICATION

(11) **EP 2 590 509 B1**
(45) Date of publication and mention of the grant of the patent: **31.10.2018**
(21) Application number: 11760555.0
(22) Date of filing: 08.07.2011
(51) Int. Cl.: A01N 37/16, A01N 59/00, C02F 1/72, C02F 1/32, C02F 103/08

(54) **METHOD FOR THE PREPARATION AND THE USE OF BIOCIDES ENRICHED IN ACTIVE RADICALS BEFORE USAGE**
VERFAHREN ZUR HERSTELLUNG UND VERWENDUNG VON BIOZIDEN MIT AKTIVER RADIKALANREICHERUNG VOR DER VERWENDUNG
PROCÉDÉ POUR LA PRÉPARATION ET L'UTILISATION DE BIOCIDES ENRICHIS EN RADICAUX ACTIFS AVANT UTILISATION

(30) Priority: 08.07.2010 IT RM20100372
(43) Date of publication of application: 15.05.2013
(73) Proprietor: Chimec S.p.A., 00144 Roma (IT)
(72) Inventor: BUCCOLINI, Marco, I-62032 Camerino MC (IT); CESARI, Massimiliano, I-63100 Ascoli Piceno AP (IT); SCHIAPARELLI, Stefano, I-16139 Genova GE (IT)
(74) Representative: Predazzi, Valentina
(86) International application number: PCT/IB2011/053054
(87) International publication number: WO 2012/004772

(56) References cited:
- EP-A1- 1 401 771
- JP-A- 2003 145 180
- US-A1- 2005 178 733
- CARETTI C ET AL: "Wastewater disinfection with PAA and UV combined treatment: a pilot plant study", WATER RESEARCH, ELSEVIER, AMSTERDAM, NL, vol. 37, no. 10, 1 May 2003 (2003-05-01), pages 2365-2371, XP004421940, ISSN: 0043-1354, DOI: DOI:10.1016/S0043-1354(03)00025-3 cited in the application

## Description

The present description relates to a method for preparing a biocide enriched in oxygen-centred free radicals through UV radiation, a method for sterilizing waters, a method for controlling the colonisation of micro-organisms in treated waters, as well as a method for controlling and/or preventing the colonisation on the surfaces of submerged structures by aquatic filtering organisms that use said biocide enriched in oxygen-centred free radicals and plants suitable for implementing said methods.

### PRIOR ART

The water sterilization process and more in general the control and/or prevention of the growth of undesired organisms present in such waters is normally carried out by the use of chemical disinfectants, such as biocides.

The chemical compounds with biocide activity often have the drawback of creating, with the extended use thereof, damages to the environment poisoning, besides undesired micro-organisms or organisms, also organisms belonging to the various zoological kingdoms that must not be eliminated.

The use of biocides therefore has a strong environmental impact that over the last decades, they have tried to reduce identifying biocides that are less harmful to the environment and methods for sterilizing or treating the waters involved that drastically reduce the amounts of biocide used over a predetermined period compared to traditional treatments that also envisage a continuous use of the biocide in the waters to be treated.

Patent EP1401771 to the name of the applicant for example describes a un process and a plant wherein, by monitoring the chlorophyll in the waters close to those to be treated and optionally, other parameters (for example temperature, salt concentration), the periods are extracted for performing treatments with the biocide for preventing the colonisation of plants with submerged tubes communicating with the sea, by aquatic filtering organisms.

The colonisation of such organisms in the submerged tubes of plants that take sea water and return it back again into the sea causes the obstruction of the tubes and must therefore be controlled and limited (also preferably prevented) by treatments with biocides.

Of course, the use of biocides in all of these plants and in other types of waters commonly treated with biocides has a considerable environmental impact, especially when polluting biocides are used (that unfortunately are among the most effective).

Over the last years, biocides have been identified that have a low impact on the environment, such as peracetic acid, which is now commonly used, especially considering the low environmental impact thereof.

Peracetic acid is also indicated in patent EP1401771 as biocide suitable for being used in the invention described herein, also known as peroxyacetic acid, is a peroxide with strong oxidizing properties.

Such acid, according to the literature, is used for example for sterilizing waste waters and a greater efficacy thereof has been described when the waters wherein such acid has been introduced are subsequently irradiated by UV. This sterilization strategy, as described by Caretti C et al. (Caretti C., 2003 Water Research) is very effective since the UV irradiation of the waters containing peracetic acid causes an increase in the oxidizing capabilities of such acid due to the increased formation of oxygen-centred free radicals and to the sterilizing effect of the UV radiations which, as known, may also be used alone in sterilization treatments.

It should be noted that the two disinfecting means, peracetic acid and UV irradiation, are applied on the flow of water to be sterilized, strictly in a sequence, that is, the acid is first added to the water in the right dose, then the water flow passes through an irradiation chamber, consisting of a body that may be made of metal or plastic, and of a series of UV lamps with various wavelength and energy.

The mechanism is clearly explained in the scientific works mentioned herein (e.g. Caretti C., 2003 Water Research) where the irradiation is UV made on water whereto the peracetic acid has been added in doses of few ppm. The document reports that such treatment generates very energetic free radicals: peracetic acid actually is a peroxide that tends to spontaneously release radicals and thus has strong oxidizing properties (the biocide activity thereof mostly depends on this mechanism). Irradiated with a high energy radiation as UV rays, the oxidizing capabilities of the peracetic increase, the formation of oxygen-centred free radicals increase very much and the microbiocide properties of the substance increase. Of course, all of this adds up to the sterilizing effect of UV radiations which, as said, are already used alone as sterilization method.

The final effect, as described by C. Lubello et al (C. Lubello et al. 2004 Water Research) therefore is a synergy of single effects, that is, of the effects due to the addition of peracetic acid to the waters, to the UV irradiation of such waters and to the higher production of radicals by said acid. The two disinfecting means, peracetic acid and UV irradiation, are then applied to the flow of water to be sterilized, strictly in a sequence, that is, peracetic acid is first added to the waters in the right dose, then the entire water flow is irradiated with a UV lamp.

The strict operating sequence indicated above is linked to the intrinsic instability of the generated radicals that are characterised by a half life of few µs. Radicals, in fact, are highly instable species due to the presence of an unpaired electron in the outermost electronic orbital and as such, they tend to react quickly with molecules, organisms present in solution.

The above works clearly define also the resulting oxygen-centred free radicals, which are characterised through several structural analyses (for example ESR - Electronic Spin Resonance) and whereof the life time is calculated with a certain accuracy. As indicated above, the resulting life time of the waters to be treated containing peracetic acid, for the radicals generated by irradiation with UV, according to the methods described in the literature, is of the order of fractions of second.

Document: "An EPR study on wastewater disinfection by peracetic acid, hydrogen peroxide and UV irradiation" by Roberto Bianchini et al. (Annali di Chimica, 92,2002, by Società Chimica Italiana) clearly defines the life times and the reactivity of these species, generated by UV irradiation of the peracetic acid.

As a consequence, it is easy to understand that the technology described so far may only be applied directly on the water containing the biocide, that is, when the radicals are produced *in situ.* From what reported in the literature it is understood that due to their very short half life, the radicals must be developed directly in the medium to be treated to act as microbiocide before the reactivity thereof degrades. Moreover, the combination of the UV treatment + the trigger of the radicals developed has a dual synergic sterilizing action as reported in the literature.

While the combined strategy of peracetic acid and UV for controlling and/or preventing the growth of organisms in waters, as described in the prior art, is effective it is not applicable when the masses of waters to be treated are particularly large. For example, in the case of plants with continuous inflow and outflow of sea water in the tubes thereof for cooling (polluted, among the other things, in a totally different way compared to waste waters, that is, for the presence of an abundant sea life consisting of both micro and macro-organisms), the application of such technology would not be possible. The impossibility resides in designing and having structures provided with UV irradiation chambers sufficiently large to ensure an efficient irradiation of the entire volume of water containing the biocide.

For plants of this type, very large irradiation chambers would be required for water flows that easily exceed 5,000 m3/h and that may even reach 100,000 m3/h.

There also exist UV irradiation systems for sea waters, but only if the cooling systems do not exceed 500-1000 m3/h: in these cases, it is possible to use the UV irradiation, ensuring sufficient travelling times of the irradiation chambers and thus obtaining a good efficacy in the water sterilization.

The efficacy of the UV technology is clearly directly proportional to the travelling times of the irradiation chamber and as much directly to the energy of the irradiation that impinges the water: the lamp power being equal, a long travelling time in the irradiation chamber will mean more energy supplied and thus higher efficacy.

With the amount of water of the industrial cooling systems it is possible to obtain quite long irradiation times, unless a large number of lamps is used in a very long irradiation chamber, which is therefore provided with an endless path of the water flow.

This would be highly uneconomical and in the practice is not feasible, since it is not possible to limit the water flow required for the plants and that hundreds if not thousands of irradiation chambers should be constructed.

For what said above, therefore, currently it is not possible to apply the strategy (biocide added to the waters and irradiation) described above to large water masses due to the objective problem relating to the use of a large number of UV lamps suitable for forming an irradiation chamber suitable for the volume of water to be treated.

Methods are therefore required having an efficacy comparable to that obtained with the technology described above, but also applicable to large water volumes for which, as mentioned above, the technology described above is not applicable in the practice.

### SUMMARY OF THE INVENTION

In the present invention, the inventors have discovered that the direct irradiation with UV of peracetic acid at a concentration higher than those commonly used in water treatments (that normally are parts per million), like concentrations of 1% and higher, prior to the water treatment, strengthens the biocide allowing an effect to be obtained that is similar to that described in the prior art (biocide in the waters to be treated + UV), allowing the treatment of the waters with the peracetic acid activated by the UV directly, without the need of irradiating the same waters.

Surprisingly, the free radicals of the peracetic acid irradiated at the minimum concentrations indicated above do not deplete in few milliseconds and therefore they allow using the peracetic acid with effect enriched in oxygen-centred free radicals introducing it in the waters to be treated after the irradiation, without the biocide losing its efficacy.

By oxygen-centred free radicals it is meant those radicals wherein the unpaired electron is on the oxygen atom.

The results indicated in the experimental section indicate that the peracetic acid enriched in oxygen-centred free radicals in the manner described hereinafter may be effectively used even at considerably lower doses than those indicated in the literature in the "peracetic in water to be treated + UV" treatments.

The advantage offered by the inventors' discovery is doubtless since in the first place, it allows the applicability of a method having an efficacy comparable to that described in the "peracetic in water to be treated + UV" treatments also to water volumes for which this method would have been not applicable as shown above, and it also allows considerably reducing the treatment costs in those systems wherein a "peracetic in water to be treated + UV" treatments would have been not proposable or prohibitive while providing a more effective treatment than that with non pre-irradiated peracetic only.

The present invention therefore provides a method for preparing an oxidizing biocide enriched in oxygen-centred free radicals, as described in claim 1; a method for sterilizing the waters wherein said biocide is used, a method for controlling the colonisation of micro-organisms in treated waters, as well as a method for controlling and/or preventing the colonisation on the surfaces of submerged structures by aquatic filtering organisms that use said biocide enriched in oxygen-centred free radicals and plants suitable for implementing said methods.

### DETAILED DESCRIPTION OF THE DRAWINGS

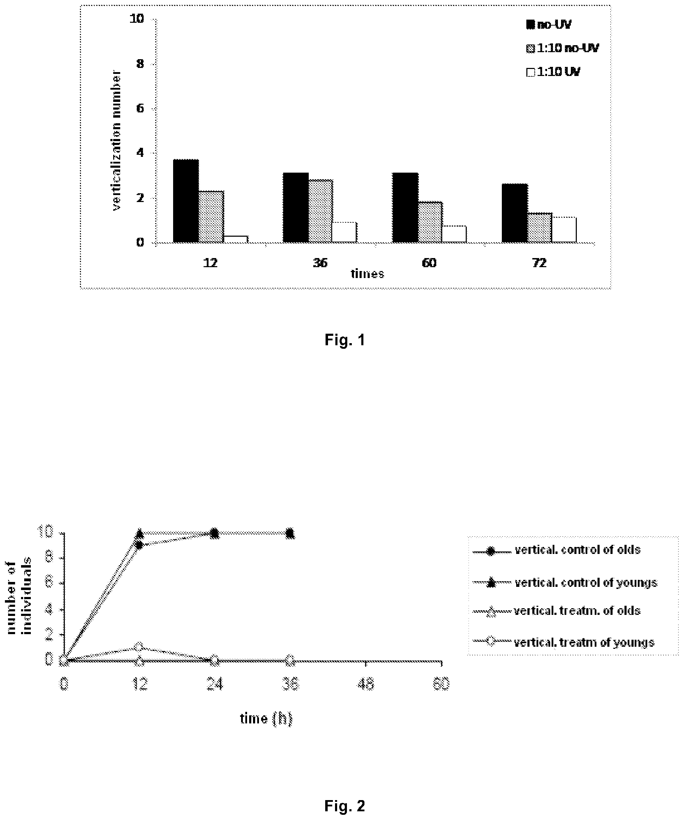

Figure 1 shows a summary histogram that shows the average of the number of mussels that have verticalized during all the experiments made, wherefrom the effect of the irradiation with UV on the peracetic acid prior to the treatment is very clear, compared to the treatment without such irradiation on the peracetic acid;
   - **white histogram** - UV irradiation on the product diluted 1:10 - continuous dosing multiplied by 10 for always obtaining 5 ppm a day
   - **black histogram** - product at 15% by weight not irradiated, continuous dosing of 5 ppm a day)
   - **grey histogram** - product at 1.5% by weight not irradiated, after dilution 1:10, and dose multiplied by 10 for always obtaining 5 ppm a day.
   Considering the number of observations corresponding to 20 mussels for each time (20 mussels more where the control of each treatment) and that the averages were always made on three repetitions, it is possible to conclude that the use of the peracetic acid pre-irradiated with UV is a valid implementation to the use of the untreated peracetic acid.
Figure 2 [Exp. 2 (10 ppm x 24 hours - 30 minutes on-off)] shows the effect of a treatment of 30 minutes on-off (i.e., 30 yes and 30' no) with peracetic acid at 15% by weight at a final daily concentration of 10ppm (parts per million), the untreated controls are shown in black.
Figure 3 [Exp. 3 (5 ppm x 24 hours - 30 minutes continuously)] shows the effect of a continuous treatment with peracetic acid at 15% by weight at a final daily concentration of 5ppm (parts per million), the untreated controls are shown in black.
Figures 4 and 5 [Exp. 13 repetitions 2 and 3 (5 ppm x 24 hours continuously, dilution 1: 10 - NO UV)] show the effect of a continuous treatment with peracetic acid at 1.5% by weight with doses equal to a final daily concentration of 5ppm, of peracetic acid at 15% by weight (thus, the solution at 1.5 % by weight was dosed 10 times more than the amounts of the experiment of figure 3, for obtaining the same final dose), the untreated controls are shown in black.

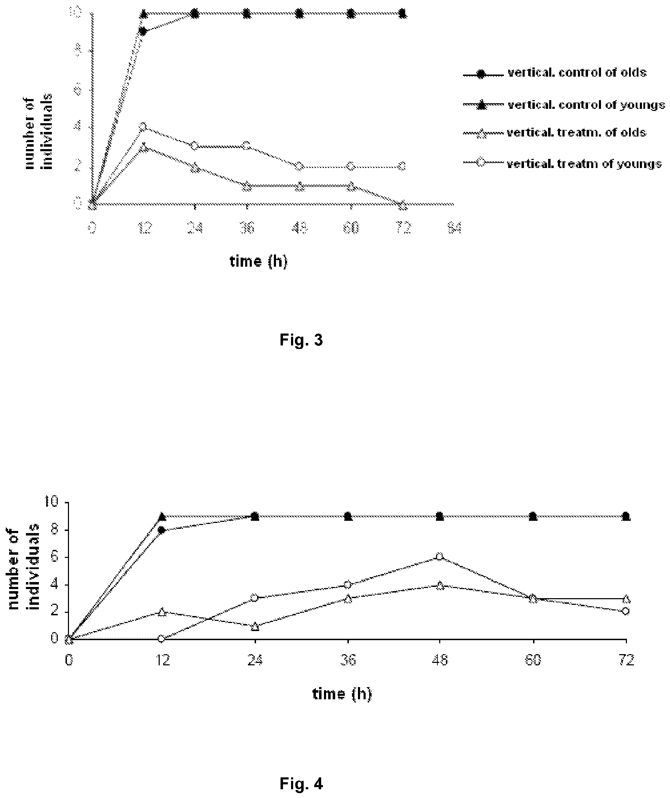

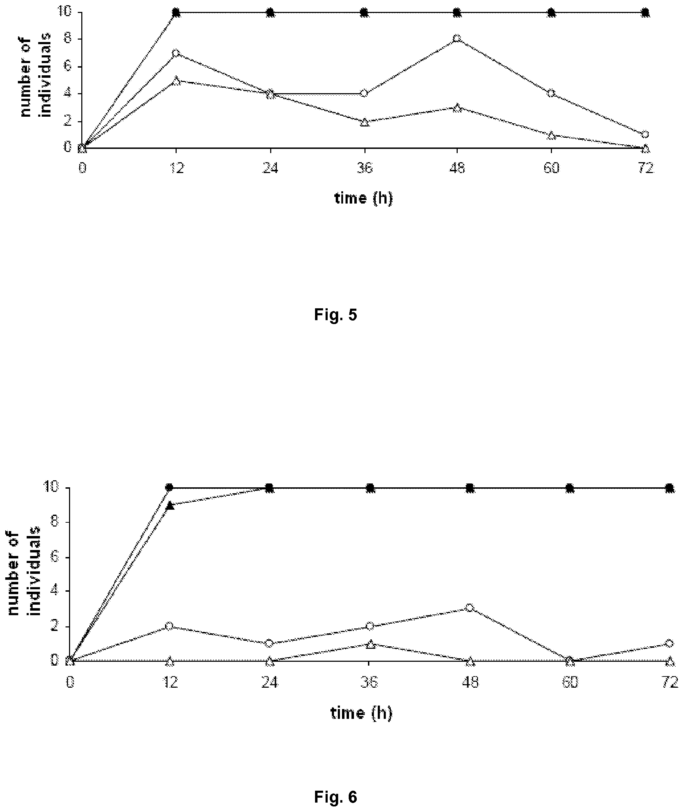

Figure 6 [Exp. 4 repetitions 3 (5 ppm x 24 hours continuously, dilution 1: 10 - UV 15 min./h)] shows the effect of a continuous treatment with peracetic acid at 1.5% by weight irradiated for 15 minutes/hour with UV with doses equal to a final daily concentration of 5ppm, of peracetic acid at 15% by weight (thus, the solution at 1.5 % by weight was dosed 10 times more than the amounts of the experiment of figure 3, for obtaining the same final dose), the untreated controls are shown in black. The stronger effect of the peracetic acid enriched in oxygen-centred free radicals by pre-irradiation with UV is clear from the figure, compared to the similar treatment performed with peracetic acid not irradiated in advance.

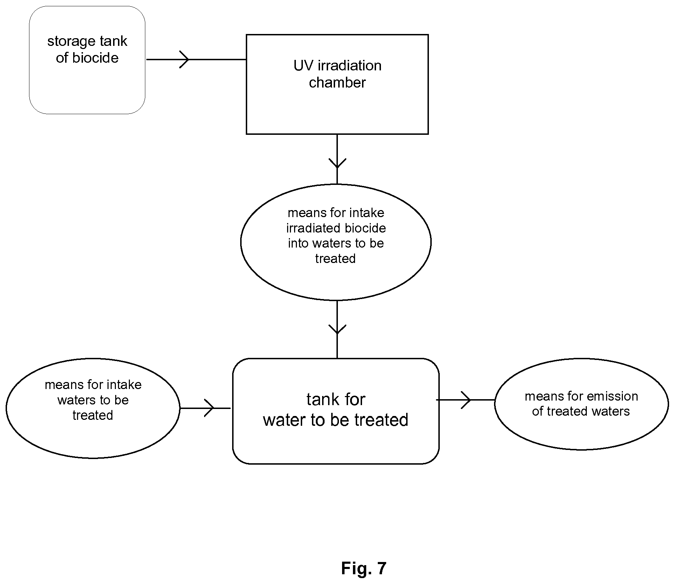

Figure 7 shows a block diagram of an embodiment of the plant according to the present invention.

### DETAILED DESCRIPTION OF THE INVENTION

The present invention therefore describes a method, as described in claim 1, for enriching a peracetic acid with oxygen-centred free radicals by irradiation with UV rays, so that said peracetic acid thus enriched may be used for sterilizing waters without the need of irradiating the waters to be treated containing the biocide that exhibits peroxide bonds. Compounds containing peroxide bonds are compounds that contain the peroxide group, -O-O- and oxygen-centred free radicals are radicals that exhibit the ion O₂²⁻.

The biocides exhibiting peroxide bonds listed hereinafter in the present description are strong oxidants and as such they degrade spontaneously in aqueous solution, resulting in the oxygen-centred free radicals that have a biocide effect. The operating principle of the oxidizing biocides is exactly this one, that is, the production of radicals that being highly unstable, react quickly with the oxidizable substances of the organisms, causing irreparable damages. The biocide efficacy of an oxidizing product is therefore linked to the property thereof of spontaneously forming the oxidizing radicals.

However, it is known that the radical life is very short, the stability thereof is very low and on the other hand, the reactivity is maximum. If the radicals are generated directly *in situ*, in the presence of the bacterial species and of the organisms they must contrast (as taught by the prior art), a strengthened biocide effect is obtained but if the formation of radicals takes place advance, not in the presence of the species to eliminate, no considerable effect is expected, due to the previous irradiation, on the product efficacy.

Unexpectedly, it has been proved by the present inventors that by irradiating concentrated peracetic acid, the amount of radicals formed is such that they remain present in the concentrated solution for a quite long time and thus, the increase of biocide efficacy lasts.

By biocide exhibiting peroxide bonds "enriched" oxygen-centred free radicals it is meant a biocide that exhibits peroxide bonds, wherein the percentage of oxygen-centred free radicals is higher than the percentage normally generated spontaneously by the compound examined exhibiting peroxide bonds.

Normally, by peroxide bonds it is meant those oxygen-oxygen bonds that are weak bonds and that can thus easily break down, forming oxidizing radicals. According to the present description, therefore, a peracetic acid is enriched in oxygen-centred free radicals when the percentage of oxygen-centred free radicals is higher than that normally present in the same, non irradiated product. A measure of the enrichment in oxygen-centred free radicals is given, for example, by the increase of the biocide capability of the same substance, which in biocides containing peroxide bonds is, as known, directly proportional to the amount of oxygen-centred free radicals released by the biocide. The comparison is easily made by comparing in identical protocols the biocide that is deemed to be enriched in oxygen-centred free radicals and the same, untreated biocide. The enrichment in radicals shall be proved if the first one exhibits a biocide activity higher than the second one, as in the example of figures 4 and 5 compared to figure 6.

According to the present description, by the irradiation of a highly concentrated peracetic acid, at a concentration starting from 1% by weight and higher, containing a peroxide bond, a large number of oxygen-centred free radicals is created. Without being bound by theories, the inventors suppose that the effect observed is related to the very large amount of radicals generated by the irradiation of the concentrated product, a number that allows them to remain at high concentrations for a long time and can exert a strengthened disinfecting action compared to the original biocide. Probably the environment created after UV irradiation is in dynamic balance, where the radicals formed exchange the unpaired electron with the stable species, actually stabilizing the radical concentration thereof. While maintaining the very short life times typical of these chemical species, the radicals remains present in a large number in the solution. This dynamic balance probably stabilizes the number of radicals formed which, until they remain above a certain threshold, are capable of recreating by reaction with the biocide containing peroxide bond in a high concentration: probably after a certain time, the irradiation effect decreases, the radical concentration drops below the critical threshold and the solution is increasingly formed by the starting acid.

In short, the direct irradiation on the biocide solution containing the concentrate peroxide bond shall create a strengthened biocide wherein the radical species compared to the stable ones are much larger than those normally present in the biocide prior to the UV treatment, in the "strengthened" biocide, therefore, the radical/stable species ratio shall be moved towards a larger presence of radical species compared to the same ratio in the biocide prior to the irradiation.

The radicals of the UV-treated biocide in its concentrated form prior to the dilution in the waters to be treated, larger in number and lasting longer, will perform a better control on the waters treated, or they will be capable of ensuring the same control ensured by the biocide not enriched in oxygen-centred free radicals at much lower applied concentrations.

By way of an example but applicable in general to the substances containing peroxide bond, the balance between the stable species (in the example peracetic acid) and relative radical *OH is described in the literature (see page 2943 of article C. Lubello et al. 2004 Water Research, page 2366 of Caretti C. et al. Water Research 2003, 2365-2371). In the peracetic acid, for example, the shift is from the stable species (CH3COOOH) to radical *OH + ion CH3COO⁻

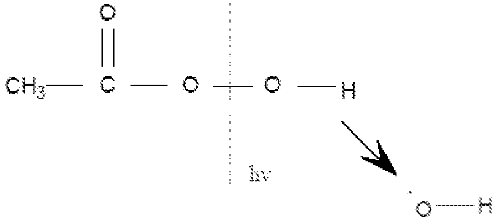

The peracetic molecule (or likewise, the biocide molecule containing the peroxide bond) can then react as radicals *OH produced according to the following addiction and subtraction reactions:

CH3CO3H + *OH → CH3CO4H2 → CH3CO2H + *OOH,

CH3CO3H + *OH → CH3CO* + O2 + H2O

The possibility of using a peracetic acid that exhibits peroxide bonds enriched in oxygen-centred free radicals as described in the present description, then introducing it in the waters to be treated, is totally unexpected since the literature data indicate that the irradiation should be made on the waters to be treated containing the biocide at the working concentration since the radicals generated by the UV treatment have a half life equal to fractions of second.

In the case presented herein, it is clear that much more than fractions of second elapse between the peracetic acid irradiation and the introduction thereof in the waters to be treated, however, as shown in the figures, which show graphs obtained fro results repeated each one in triplicate, the efficacy of the pre-treated peracetic acid is considerably higher than that of the untreated peracetic acid, which proves that the pre-treatment is capable of strengthening the biocide action. The experiments shown below show that running the same treatment protocol using the peracetic acid as is and the pre-irradiated peracetic acid according to the present description, the biocide effect is stronger in protocols that use the pre-irradiated peracetic acid, enriched in oxygen-centred free radicals, as described herein.

Accordingly, the object of the invention is a method, as described in claim 1, for preparing an oxidant biocide enriched in oxygen-centred free radicals, wherein a peracetic acid in a concentration of at least 1% by weight containing a peroxide bond is irradiated with a UV lamp so to generate active radicals.

Wherein said biocide is peracetic acid, also usable in the waters of water courses, rivers, lakes, sea, etc., and/or in the food industry (where it may be applied as cleaner and disinfectant) and/or for removing bacteria and fungi and/or for disinfecting the water recycled from the rinsing of foodstuffs and/or for disinfecting medical supplies and/or for purifying water as disinfectant and/or for disinfecting tubes and/or for disinfecting the water of cooling towers etcetera, and/or for controlling the colonisation of micro-organisms in the waters to be treated and/or in a control method for controlling and/or preventing the colonisation by aquatic filtering organisms on the surfaces of submerged structures.

The total concentration of the peracetic acid to be treated with UV may range from a minimum of 1% by weight up to much higher concentrations as those more commonly available on the market up to the maximum ones available on the market known by the man skilled in the art (e.g. peracetic at 5% by weight, at 15% by weight).

The irradiation of the biocide to be treated may have a variable duration over time and may be either continued or discontinued. It is essential that the irradiation be made so as to generate active radicals in the biocide treated. The energy required will vary according to the amount of material to be treated, according to the size and type of irradiation chamber. The biocide, in fact, may cross the chamber as a continuous flow or it may be collected in the chamber prior to the irradiation. It is clear that a passage to a continuous flow will require a sufficiently strong lamp to induce the formation of the desired active radicals. The man skilled in the art will be able to adjust the optimum values without the need of many experiments or using inventive activity starting from some ways for enriching the biocide in free radicals according to the invention shown herein. According to the present description, the irradiation may be made for example in an irradiation chamber having a minimum capacity of 1 litre with a lamp of at least 6W wherein a biocide flow to be irradiated may flow, comprised between about 10-500 litres/hour. Then, the irradiation may be made, according to this embodiment, with an energy comprised between about 40 and about 2200 J/litre according to the equation by which the irradiation energy expressed in Joule is given by the lamp power, expressed in W, by the time expressed in seconds.

In order to irradiate flows higher than 500 l/h it will be suitable to use chambers having a capacity higher than 1 litre, also by a factor of ten or more, in this case the lamp power shall of course be adapted or multiple lamps may be used so as to provide the required energy. According to the present invention, the biocide may be irradiated with an energy not lower than 20J/litre or 35 mJ/cm2, up to values as those shown in the literature for the methodologies wherein the waters to be treated containing the biocide were irradiated (that is, 100-300 mJ/cm2).

For the present invention, therefore, the suitable irradiation values will start from 20 J/litre, then 30, 40, 50, 60, 70, 80, 90, 100, 110, 120, 130, 140, 150, 160, 170, 180 J/litre or more or, expressing the energy by cm2, values starting from 35 mJ/cm2 to, 40, 45, 50, 55, 60, 65, 70, 75, 80, 05, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250, 255, 260, 265, 270, 275, 280, 285, 290, 295, 300 mJ/cm2 although treatments below 100 mJ/cm2 are preferable for cost reasons.

Several producers of irradiation chambers exist on the market, currently used as sterilization systems for a large number of applications. Some examples of applications are: primary waters, for reaching the standards imposed for drinking waters or for reaching high biological standards, water supplies of drinking water for municipal or private uses, process waters for industrial uses, drinking water for residential dwellings, schools, industries, hotels, hospitals, waters for foodstuff and drink industries, swimming pool waters, supply waters for air conditioning systems, analysis laboratory waters.

The most qualified producers are: Depurex88 srl (Italy, Padua), Montagna Ultraviolet System srl (Italy, Lachiarella - Milan); Trojan UV (Ontario - Canada), Applied Membranes Inc. (Vista, California).

The wavelengths usually used for disinfecting through UV are 254 nm and 185 nm. For disinfecting and destroying ozone residues, the most used wavelength is 254 nm. The 185 nm wavelength is only used for destroying chlorine residues and for reducing the value of TOC in water. As regards the sterilizing capability of UV light, it penetrates the outer cellular membrane of the micro-organisms, passes through the cell body and reaches the DNA, altering the genetic system. The micro-organisms are then destroyed with a non chemical method.

Since the light at 185nm, used in TOC reduction, is more energetic compared to the 254 nm, it decomposes the organic molecules.

The UV lamps normally used are at low pressure with mercury discharge. They are made from a special quartz that looks like standard glass but actually is a discriminating filter that mainly lets the two selected wavelengths pass.

A wide range of irradiation chambers is available on the market, made from a plastic material but also from 304 and 316L stainless steel; the sizes may be very large, with a diameter of over one metre, containing up to 32 lamps, with variable absorption, up to 110 W for each lamp.

An object of the present description is also the biocide enriched in oxygen-centred free radicals that may be obtained by the method described above, such biocide shall therefore be at a concentration of at least 1% by weight, which may therefore be of 2, 3, 4, 5, 6, 7, 8, 9, 10, 11, 12, 13, 14, 15 % by weight.

The peracetic acid as obtained may be used for any method wherein the peracetic acid is used in the prior art.

For example, an object of the invention is a method for sterilizing waters as described in claim 2.

The "strengthened peracetic acid" (another definition used in the present description for "peracetic acid enriched in oxygen-centred free radicals") according to the present description may be used following the water sterilization protocols that normally use peracetic acid, wherein the strengthened peracetic acid may be used at final concentrations equal to, or preferably lower than, those used for the same, non strengthened peracetic acid (thus, prior to the UV irradiation) in standard protocols.

The treatment may be performed for periods ranging from 5 minutes to over 72 hours, at final concentrations of peracetic acid enriched in oxygen-centred free radicals starting from 1 ppm up to over 100 ppm, even 200 or 300 ppm. The sterilization method may provide one or more treatments of the waters to be sterilized with the peracetic acid enriched in oxygen-centred free radicals according to the present description.

For a better performance of the peracetic acid enriched in oxygen-centred free radicals, it will be preferable to use said peracetic acid within 20 minutes from the UV irradiation according to the method of the present description, more preferably within 15 minutes and even more preferably, within 10 or 5 minutes from said irradiation.

Another object of the present description is a method for controlling the colonisation of micro-organisms in waters as described in claim 3.

The method may be applied to stagnant waters, to ballast waters, to cooling waters for industrial plants, in order to eliminate or reduce the colonisation of undesired micro-organisms in said waters.

The treatment may be performed for periods ranging from 5 minutes to over 72 hours, at final concentrations of peracetic acid enriched in oxygen-centred free radicals starting from 1 ppm up to over 100 ppm, even 200 or 300 ppm and the control method may provide one or more treatments of the waters to be sterilized with the peracetic acid enriched in oxygen-centred free radicals according to the present description.

In the case of isolated waters, which must be reintroduced in open basins, the above treatment may be performed once whereas in other cases it may optionally be repeated over time at intervals of minutes, hours, days, months or even years.

The non continuity of the treatment is particularly indicated for all those systems wherein the waters to be treated do not freely flow into open waters, but are at least temporarily isolated or in any case separated (for example, waters for irrigation or for drinking or non drinking household use) from basins, rivers and in general, free waters.

The monitoring may be performed by any means, technique, kit and/or device suitable for detecting and optionally identifying micro-organisms (for example identifying undesired micro-organisms) and it may be performed before and/or after the treatment. In general, an initial monitoring may be useful for assessing whether and when a treatment is required and a subsequent monitoring may be useful for assessing the efficacy thereof.

For a better performance of the peracetic acid enriched in oxygen-centred free radicals, it will be preferable to use said peracetic acid within 20 minutes from the UV irradiation according to the method of the present description, more preferably within 15 minutes and even more preferably, within 10 or 5 minutes from said irradiation.

A further object of the present description is a method for controlling and/or preventing the colonisation by aquatic filtering organisms on the surfaces of submerged structures as described in claim 4.

This method applies in particular to industrial plants that use free waters (rivers, lakes, the sea) for cooling the same plant and wherein the water used flows through cooling tubes, containing filters, and is then reintroduced into the river, lake or the sea.

In this type of plants it is desired to especially eliminate those aquatic filtering organisms that colonise into the same tubes, clogging them.

The step iii) of monitoring said organisms may be performed once or multiple times, before and/or after and/or during the treatment. In the case of continuous treatment, in fact, the monitoring may serve for verifying the efficacy thereof and optionally for modifying the dose during the works whereas in the case of periodical treatments, the monitoring may also be performed periodically.

The monitoring at step iii) of the above method (control of the colonisation of aquatic filtering organisms) may be carried out in the waters in the proximity of said structures, where such definition also indicates the waters that flow through the tubes, at a macro and/or microscopic level, identifying not only adult organisms but also larvae at various development stages and young.

The monitoring of such organisms may be performed by any means suitable for their detection (water sampling and manual check, for example with a microscope and/or stereoscope, manual sampling and automated check, or vice versa, automated or semi-automated sampling and check, such as for example filtering of a fair amount of water with a 20 micron mesh, collection of the filtrate, counting with polarized light microscope). Since such means, which may also use computer implementations, are commonly known to the man skilled in the art, it will not be necessary to indicate them in detail for the execution of the method described herein.

Also in this case, the treatment may be performed for periods ranging from 5 minutes to over 72 hours, at final concentrations of peracetic acid enriched in oxygen-centred free radicals starting from 1 ppm up to over 100 ppm, even 200 or 300 ppm and said control and/or prevention method may provide one or more treatments of the waters to be sterilized with the peracetic acid enriched in oxygen-centred free radicals according to the present description.

For a better performance of the peracetic acid enriched in oxygen-centred free radicals, it will be preferable to use said biocide within 20 minutes from the UV irradiation according to the method of the present description, more preferably within 15 minutes and even more preferably, within 10 or 5 minutes from said irradiation.

As indicated at item ii), the treatment may be performed con continuously or in a discontinued manner, that is, the biocide enriched in oxygen-centred free radicals according to the present description may be introduced with a continuous flow in the waters to be treated, or the biocide may be introduced at repeated time intervals (for example every 30, 60, 90, 120 etc. minutes).

In a particular embodiment, there is provided a method for controlling and/or preventing the colonisation by aquatic filtering organisms described above, further comprising all the steps of the method described in European Patent EP1401771 [0025-0032] [0040-0081] and in claims 1-9.

In the application of the method described in patent EP1401771, the method shall be strongly implemented by the addition of a step wherein a peracetic acid having concentration of at least 1% by weight is irradiated with a UV lamp so to generate a percentage of oxygen-centred free radicals higher than that present in said non irradiated peracetic acid before its use in waters to be treated.

In all the methods indicated above, the treatment may be performed con continuously or in a discontinued manner, that is, the peracetic acid enriched in oxygen-centred free radicals according to the present description may be introduced with a continuous flow in the waters to be treated, or the peracetic acid may be introduced at repeated time intervals (for example every 30, 60, 90, 120 etc. minutes).

It is clear that in each of the methods wherein the peracetic acid enriched in oxygen-centred free radicals according to the present description is used, a step wherein the waters to be treated comprising said peracetic acid at the final usage concentration (about 1-300 ppm) are irradiated with UV will not be required since the pre-irradiation of the biocide containing at least one peroxide bond as described herein strengthens the efficacy of the biocide allowing the step of irradiation of the waters to be treated to be prevented.

For the indications on the energy required for the UV irradiation and on the concentrations of the biocide to be irradiated, reference shall be made to the indications given above.

A water treatment plant, as described in claim 6, is also an object of the present description.

According to the present invention, such plant in the first place allows water sterilization.

To this end, the plant in the first place comprises means for the intake of waters to be treated.

Such intake means, without loss of generality, may comprise tubing systems, pumps, water collection tanks, or whatever may advantageously be used for making the waters to be treated flow within the same plant.

Moreover, the plant is provided with at least one storage basin containing peracetic acid at a concentration of at least 1% by weight.

According to the present invention, the plant is further provided with an irradiation chamber for said peracetic acid, such irradiation being suitable for generating peracetic acid enriched in oxygen-centred free radicals. In particular to this end, the peracetic acid is exposed to a UV lamp and thus irradiated with UV rays.

The plant shall therefore be provided with means for introducing the peracetic acid enriched in oxygen-centred free radicals in the waters to be treated. A plant according to the present invention comprises means for the emission of treated waters.

Also with reference to the means for introducing the biocides in the waters and to the means for emitting the treated waters, it should be understood that they may comprise any combination of tubes, conduits, pumps, basins or other structures suitable for the purpose, selectable by a man skilled in the art based on any specific plant embodiment.

A plant according to the present invention may advantageously and further allow performing a control function over the colonisation of micro-organisms in waters.

To this end, a plant according to the present invention shall be provided with means for monitoring micro-organisms in waters to be treated and/or treated. Such means for monitoring micro-organisms should be deemed within the skills of a man skilled in the art, and such as to allow performing a monitoring according to what described in the present description, and thus they shall not be described herein in detail.

Moreover, a plant according to the present invention may also allow a function of control and/or prevention of the colonisation by aquatic filtering organisms and/or larvae thereof on the surfaces of submerged structures. Such function is made possible by means for monitoring aquatic filtering organisms and/ or larvae thereof in waters near surfaces of submerged structures.

Moreover, the above plant may advantageously comprise means for monitoring identification of phytoplankton biomass parameters in waters in the proximity of the surfaces of submerged structures and relevant means for processing said values. In this case, preferably, the means for monitoring larvae of aquatic filtering organisms are selected so as to be suitable for performing a quality and quantity monitoring of zooplankton.

Such means for monitoring aquatic filtering organisms and/or larvae thereof should be deemed within the skills of a man skilled in the art, and such as to allow performing a monitoring according to what described in the present description, and thus they shall not be described herein in detail.

The following examples are intended to illustrate some of the tests performed to verify the efficacy of the method for strengthening biocides having at least one peroxide bond without of course limiting the invention to the same.

### EXAMPLES

### 1. Setup of the pilot plant for the trials made

The tests of the efficacy of peracetic acid irradiated with UV were carried out on a pilot plant consisting of a hydraulic system wherein the water is introduced with an immersion pump, directly installed in the sea, model EBARA BEST 2M: the plant consists of tubes made of stiff plastic material, walled up to the cliff, that bring the water into a building wherein the aquariums intended for seating the plastic trays for the mussels are made. The union for the additive pump (IWAKI Mod. EW-F10) was inserted at the inlet of the treatment basin to add the additives in line, minimising the distance between the inlet of the product to be tested and the tray containing the mussels. The overall capacity of the pump was found to be 83 ± 4.6 litres a minute: once the tube were connected to the aquariums, two taps were also added upstream of the basins to calibrate the flow and obtain the desired one of 30 /minute for the single basins (treatment and control).

20 Mytilus galloprovincialis were then arranged into each one of the two basins, one for treatment and one for control, of which 10 sized about one centimetre and 10 of larger size. Both the verticalization and the mortality were observed during the tests. The 'verticalization', in particular, is an important aspect to be evaluated in the tests related to the mussel response to the type (or concentration) of biocide. The incapability of anchoring to the byssus and thus reaching an optimum position for filtering the water in fact represents the first tangible sign of the biocide effect, which starts to impair the normal vital functions of the mussel.

### 2. Evaluation of the effect of the non pre-irradiated peracetic acid (figure 2)

During the first experiment, the sea pump was made to operate continuously for three days and the peracetic acid solution at 15% by weight was administered to the mussels in the amount of 20 ppm x 24h with the additive pump operating intermittently: 30 minutes on/off (final concentration: 10 ppm a day).

This first test, shown by way of an example, has shown an excellent effect of the biocide so that there was a total lack of verticalization of the mussels in the treatment basin, whereas 90% of those in the control basin were already verticalized after the first 12h of the test.

### 3. Calculation of the minimum ineffective daily concentration of peracetic acid (figure 3)

Having seen the excellent yield of the peracetic acid at 15% by weight, the next tests aimed at finding the minimum daily concentration such as to not ensure an optimum efficacy. That concentration will then bed tested with the addition of the UV irradiation and any differences and advantages of this technique shall be observed.

The test that envisaged a concentration of 5 ppm for 24h continuously gave the following result: the effect of this product concentration gave no optimum results since the verticalization of several mussels was observed, despite the continuous addition of the biocide.

### 4. Experiments of direct irradiation of the concentrated biocide with UV and subsequent use thereof in the waters to be treated (figures 4-6)

After that, the concentrated product (peracetic acid at 15% by weight - commercial name Degaclean 150 by Evonik Degussa International AG) was stored in a tank for irradiation: the tank is provided with a crystal sheet on the top side whereon the UV lamp is placed. The amount of product required for adding 5 ppm for the entire test day, is very small so that it is not possible to make the irradiation of such a small amount. For this reason it was decided to use a dilution 1:10 of the product, thus working with a final concentration of 1.5% by weight of peracetic acid rather than the initial 15% by weight: of course the doses were multiplied by 10, so as to always obtain the addition of 5 ppm a day of peracetic acid at 15% by weight. Moreover, the experiment shall be compared with tests run both with the addition of peracetic acid at 15% by weight non irradiated and with the same dilution (1:10 then peracetic acid 1.5 % by weight non irradiated).

A first experiment, during which the solution of 1.5% by weight of peracetic acid is irradiated for 15 minutes/hour and then added at 5 ppm continuously, showed a considerable effect on the verticalization of the mussels, as shown in the graph of figure 6.

Further tests were conducted to verify the effect of the use of a solution with dilution 1:10, of the dose at 5 ppm without UV (figures 4 and 5).

### 5. Summary histogram of the experimental results obtained (figure 1)

From this final graph that shows the average of the number of mussels that verticalized during all the experiments, the effect of UV compared to the treatment without the same is very clear:
- white histogram - UV irradiation on the product diluted 1:10 - continuous dosing multiplied by 10 for always obtaining 5 ppm a day
- black histogram - product at 15% by weight not irradiated, continuous dosing of 5 ppm a day)
- grey histogram - product at 1.5% by weight not irradiated, after dilution 1:10, and dose multiplied by 10 for always obtaining 5 ppm a day.

Considering the number of observations corresponding to 20 mussels for each time (20 mussels more where the control of each treatment) and that the averages were always made on three repetitions, it is possible to conclude that the UV rays are a valid implementation to the use of the peracetic acid.

### BIBLIOGRAPHY

- Caretti C, Lubello C Wastewater disinfection with PAA and UV combined treatment: a pilot plant study. 2003 Water Research 37, 2365-2371
- C. Lubello et al .Municipal-treated wastewater reuse for plant nurseries irrigation. 2004 Water Research 2939-2947
- Bianchini R. An EPR study on wastewater disinfection by peracetic acid, hydrogen peroxide and UV irradiation. Annali di Chimica, 92,2002, by Società Chimica Italiana
- Patent EP1401771

## Claims

1. A method for preparing an oxidant biocide enriched in oxygen-centred free radicals, wherein peracetic acid having a concentration of at least 1% by weight is irradiated with UV with an energy from 20 J/litre and between 35 mJ/cm2 and 300 mJ/cm2 at wavelengts of 254 nm or 185 nm, so as to generate a percentage of oxygen-centred free radicals higher than the percentage present in the non irradiated peracetic acid.

2. A method for sterilizing waters comprising the following steps:
i) at least one step of preparing an oxidant biocide enriched in oxygen-centred free radicals according to claim 1, and
ii) at least one step wherein the peracetic acid obtained in step i), is introduced in the waters to be treated.

3. A method for controlling the colonisation of micro-organisms in waters comprising the following steps:
i) at least one step of preparing an oxidant biocide enriched in oxygen-centred free radicals according to claim 1, and;
ii) at least one step wherein the biocide obtained in step i), is introduced in the waters to be treated; and
iii) at least one step of monitoring said micro-organisms in the waters to be treated and/or in the waters treated.

4. A method for controlling and/or preventing the colonisation by aquatic filtering organisms on the surfaces of submerged structures comprising the following steps:
i) of preparing an oxidant biocide enriched in oxygen-centred free radicals according to claim 1;
ii) continuously or periodically releasing the peracetic acid obtained in step i) in the waters to be treated, and
iii) at least one step of monitoring said aquatic filtering organisms and/or larvae thereof in waters near said structures.

5. The method according to any one of claims 2-4 wherein said peracetic acid obtained in step i) is used in the waters to be treated at final concentration of between 1 and 300 ppm.

6. A plant for treating waters comprising:
a) means for the intake of waters to be treated;
b) at least one storage tank containing peracetic acid having a concentration of at least 1%;
c) at least one irradiation chamber for irradiating said peracetic acid by means of UV rays comprising at least one UV lamp capable of generating an energy comprised from 20 J/litre and between 35 mJ/cm2 and 300 mJ/cm2 and wavelengts of 254 nm or 185 nm;
d) means for the intake of said peracetic acid irradiated with said UV lamp;
d') a tank for said waters to be treated, receiving said waters to be treated and said irradiated peracetic acid from different intakes, and
e) means for the emission of treated waters
wherein c) is upstream of d) and e),
**characterised in that** said waters to be treated are not irradiated.

7. The plant according to claim 6, further comprising means for monitoring micro-organisms in waters to be treated and/or treated.

8. The plant according to claims 6 or 7 further comprising means for monitoring aquatic filtering organisms and/ or larvae thereof in waters near surfaces of submerged structures.

## Patentansprüche

1. Verfahren zum Herstellen eines oxidierenden Biozids mit einer Anreicherung von freien Radikalen mit zentral angeordnetem Sauerstoff, wobei Peressigsäure mit einer Konzentration von mindestens 1 Gewichtsprozent mit UV-Licht mit einer Energie von 20 J/Liter und zwischen 35 mJ/cm² und 300 mJ/cm² bei Wellenlängen von 254 nm oder 185 nm bestrahlt wird, um so einen prozentualen Anteil von freien Radikalen mit zentral angeordnetem Sauerstoff zu erzeugen, der höher als der prozentuale Anteil ist, der in der unbestrahlten Peressigsäure vorliegt.

2. Verfahren zum Sterilisieren von Wasser, das die folgenden Schritte umfasst:
i) mindestens einen Schritt des Herstellens eines oxidierenden Biozids mit einer Anreicherung von freien Radikalen mit zentral angeordnetem Sauerstoff gemäß Anspruch 1, und
ii) mindestens einen Schritt, in dem die in Schritt i) erhaltene Peressigsäure in die zu behandelnden Wasser eingebracht wird.

3. Verfahren zum Steuern der Ansiedlung von Mikroorganismen in Wassern, das die folgenden Schritte umfasst:
i) mindestens einen Schritt des Herstellens eines oxidierenden Biozids mit einer Anreicherung von freien Radikalen mit zentral angeordnetem Sauerstoff gemäß Anspruch 1, und;
ii) mindestens einen Schritt, in dem das in Schritt i) erhaltene Biozid in die zu behandelnden Wasser eingebracht wird; und
iii) mindestens einen Schritt eines Überwachens der Mikroorganismen in den zu behandelnden Wassern und/oder in den behandelten Wassern.

4. Verfahren zum Steuern und/oder Verhindern der Ansiedlung durch filternde Wasserorganismen auf den Oberflächen eingetauchter Strukturen, das die folgenden Schritte umfasst:
i) Herstellen eines oxidierenden Biozids mit einer Anreicherung von freien Radikalen mit zentral angeordnetem Sauerstoff gemäß Anspruch 1;
ii) kontinuierliches oder periodisches Einbringen der in Schritt i) erhaltenen Peressigsäure in zu behandelnde Wasser, und
iii) mindestens einen Schritt eines Überwachens der filternden Wasserorganismen und/oder deren Larven in Wassern in der Nähe der Strukturen.

5. Verfahren gemäß einem der Ansprüche 2 - 4, wobei die in Schritt i) erhaltene Peressigsäure in den zu behandelnden Wassern bei Endkonzentrationen zwischen 1 und 300 ppm verwendet wird.

6. Anlage zur Wasserbehandlung, die umfasst:
a) Mittel zur Aufnahme von zu behandelnden Wassern;
b) mindestens einen Speichertank, der Peressigsäure mit einer Konzentration von mindestens 1 % enthält;
c) mindestens eine Bestrahlungskammer zum Bestrahlen der Peressigsäure mittels UV-Strahlen, die mindestens eine UV-Lampe umfasst, die in der Lage ist, eine Energie zu erzeugen, die 20 J/Liter und zwischen 35 mJ/cm² und 300 mJ/cm² und Wellenlängen von 254 nm oder 185 nm umfasst;
d) Mittel zur Aufnahme der Peressigsäure, die mit der UV-Lampe bestrahlt worden ist;
d') einen Tank für die zu behandelnden Wasser, der die zu behandelnden Wasser und die bestrahlte Peressigsäure von verschiedenen Aufnahmen empfängt, und
e) Mittel für die Abgabe von behandelten Wassern
wobei c) den Schritten d) und e) vorgeschaltet ist,
**dadurch gekennzeichnet, dass** die zu behandelnden Wasser nicht bestrahlt sind.

7. Anlage gemäß Anspruch 6, die weiterhin Mittel zum Überwachen von Mikroorganismen in zu behandelnden und/oder behandelten Wassern umfasst.

8. Anlage gemäß den Ansprüchen 6 oder 7, die weiterhin Mittel zum Überwachen von filternden Wasserorganismen und/oder deren Larven in Wassern in der Nähe von Oberflächen eingetauchter Strukturen umfasst.

## Revendications

1. Procédé de préparation d'un biocide oxydant enrichi en radicaux libres centrés sur l'oxygène, dans lequel un acide peracétique à une concentration d'au moins 1 % en poids est exposé à un rayonnement UV à une énergie à partir de 20 J/litre et entre 35 et 300 mJ/cm² à des longueurs d'ondes de 254 nm ou de 185 nm, de façon à générer un pourcentage de radicaux libres centrés sur l'oxygène supérieur au pourcentage présent dans l'acide peracétique non exposé audit rayonnement.

2. Procédé de stérilisation des eaux comprenant les étapes suivantes :
i) au moins une étape de préparation d'un biocide oxydant enrichi en radicaux libres centrés sur l'oxygène selon la revendication 1, et
ii) au moins une étape dans laquelle l'acide peracétique obtenu à l'étape i) est introduit dans les eaux à traiter.

3. Procédé de lutte contre la colonisation des eaux par des micro-organismes comprenant les étapes suivantes :
i) au moins une étape de préparation d'un biocide oxydant enrichi en radicaux libres centrés sur l'oxygène selon la revendication 1 ;
ii) au moins une étape dans laquelle le biocide obtenu à l'étape i) est introduit dans les eaux à traiter ; et
iii) au moins une étape de surveillance desdits micro-organismes dans les eaux à traiter et/ou dans les eaux traitées.

4. Procédé de lutte et/ou de prévention contre la colonisation des surfaces de structures immergées par des organismes aquatiques filtreurs comprenant les étapes suivantes :
i) préparation d'un biocide oxydant enrichi en radicaux libres centrés sur l'oxygène selon la revendication 1 ;
ii) libération en continu ou par intermittence de l'acide peracétique obtenu à l'étape i) dans les eaux à traiter ; et
iii) au moins une étape de surveillance desdits organismes aquatiques filtreurs et/ou larves de ceux-ci dans les eaux proches desdites structures.

5. Procédé selon l'une quelconque des revendications 2 à 4 dans lequel ledit acide peracétique obtenu à l'étape i) est utilisé dans les eaux à traiter à une concentration finale comprise entre 1 et 300 ppm.

6. Installation de traitement des eaux comprenant:
a) un moyen de prise d'eaux à traiter ;
b) au moins une cuve de stockage contenant de l'acide peracétique à une concentration d'au moins 1 % ;
c) au moins une chambre d'exposition pour exposer ledit acide peracétique à des rayons UV comprenant au moins une lampe UV capable de générer une énergie à partir de 20 J/litre et entre 35 et 300 mJ/cm² à des longueurs d'ondes de 254 nm ou de 185 nm ;
d) un moyen d'apport en acide peracétique ayant été exposé au rayonnement de ladite lampe UV ;
d') une cuve pour lesdites eaux à traiter, qui reçoit lesdites eaux à traiter et ledit acide peracétique ayant été exposé à un rayonnement de différentes sources, et
e) un moyen d'émission des eaux traitées
où c) est en amont de d) et e),
**caractérisée en ce que** lesdites eaux à traiter ne sont pas exposées à rayonnement.

7. Installation selon la revendication 6, comprenant en outre un moyen de surveillance des micro-organismes dans les eaux à traiter et/ou traitées.

8. Installation selon les revendications 6 ou 7, comprenant en outre un moyen de surveillance des organismes aquatiques filtreurs et/ou larves de ceux-ci dans les eaux proches des surfaces de structures immergées.
